# EUROPEAN PATENT SPECIFICATION

(11) **EP 0 579 587 B1**
(45) Date of publication and mention of the grant of the patent: **08.03.2000**
(21) Application number: 93850149.1
(22) Date of filing: 16.07.1993
(51) Int. Cl.: C04B 35/80, C04B 35/00, C04B 35/58, C04B 35/10

(54) **Whisker-reinforced ceramic body**
Whiskersverstärkter keramischer Körper
Corps céramique renforcé par des whiskers

(30) Priority: 17.07.1992 SE 9202196
(43) Date of publication of application: 19.01.1994
(73) Proprietor: SANDVIK AKTIEBOLAG, 811 81 Sandviken (SE)
(72) Inventor: Collin, Marianne, S-122 36 Enskede (SE)
(74) Representative: Östlund, Alf Olof Anders

(56) References cited:
- EP-A- 0 414 910
- EP-A- 0 506 640
- WO-A-88/07902
- WO-A-89/04735
- US-A- 4 526 734
- US-A- 4 543 345
- P.M.B. WALKER 'Chambers Science and Technology Dictionary' , CHAMBERS , CAMBRIDGE 1988

## Description

The present invention relates to whisker reinforced ceramic bodies in particular ceramic cutting tool inserts with improved structure homogeneity.

It is well known in the art that the fracture toughness of a ceramic material can be increased by addition of mono-crystalline hair crystals (whiskers) and/or platelets. SiC-whiskers in an alumina matrix are disclosed in US 4,543,345. US 4,867,761 discloses the use of carbides, nitrides or borides of Ti and/or Zr in an alumina matrix. US 4,849,381 discloses a cutting tool insert comprising a mixture of whiskers and platelets.

Cutting tool inserts made of SiC-whisker-reinforced alumina are an established product on the cutting tool market mainly for machining of heat resistant materials and to some extent for machining of cast iron.

Whisker reinforced ceramic inserts are generally manufactured by uniaxial pressure sintering. Another possible way to manufacture such inserts is by tool pressing and glass encapsulated hot isostatic pressing. This latter manufacturing way is mainly used for inserts with more complex geometries. In both cases the powder that is filled into the pressing tool has to be granulated in order to obtain necessary flow properties. The most common way of granulating such powders is by spray-drying technique. Spray drying means that a slurry containing the powdery components of the final composition is dried and granulated in hot gas in the same process step. However, during spray drying the whiskers are drawn into the middle of the granules and the granule borders are depleted of whiskers. As a result the granules have a core armoured by whiskers and for that reason cannot be completely crushed during the subsequent compaction process. This leads to an inhomogeneous structure with visible granule borders in the sintered material.

GB 2214178 discloses the manufacture of whisker reinforced ceramics by freeze drying the whisker/powder suspension. The resulting 'cake' is then shaken to break up the agglomerates and sifted through a 1 mm sieve. The powder is then compacted and sintered. The powder obtained after sifting has very poor flow properties and the method can only be used in the manufacture of bodies of simple shape such as cylinders, circular discs etc which are subsequently ground to final shape and dimension. Although GB 2214178 claims that the resulting material showed the whiskers to be well-dispersed, a certain segregation can not be avoided during the freezing at least on a larger(commercial) scale and as a result the sintered body has inhomogeneous whisker distribution.

A method of obtaining a whisker reinforced ceramic body with a structure essentially free of granule borders and an essentially one-dimensional whisker orientation by injection molding is disclosed in Swedish patent application 9100895-3, (EP-A-0506640).

In Swedish patent application 9201376-2 a method of forming ceramic bodies by temperature induced flocculation is disclosed which, if applied to whisker reinforced ceramic bodies, gives a structure essentially free of granule borders and with an isotropic whisker orientation.

US-A-4,543,345 relates to SiC whisker reinforced ceramic composites and methods for making the same. The single crystal SiC whiskers are mixed with fine ceramic powders and hot pressed, said method leading to randomly distributed whiskers in the final product.

EP-A-0414910 discloses Al₂O₃/SiC-Whisker composites with a uniform dispersion of the whiskers in the Al₂O₃ matrix by conventional spray-drying.

According to the present invention it has been found that if drying and granulation are performed by freeze granulation it is possible to manufacture whisker reinforced ceramics with an improved homogeneity of the structure.
Fig 1 is a light optical micrograph in 100X of a cross section parallel to the pressing direction of a ceramic material consisting of Al₂O₃ reinforced with SiC-whiskers manufactured by spray drying and uniaxial pressure sintering as known in the art.
Fig 2 is a corresponding micrograph of a material manufactured by freeze granulation according to the present invention.
Fig 3 is a scanning electron optical micrograph in 50X of a granulated powder according to prior art, GB 2214178.
Fig 4 is a scanning electron optical micrograph in 50X of a granulated powder according to the present invention.

According to the present invention there are now provided granulated ceramic powders comprising all kinds of whisker reinforced ceramic materials comprising, in addition to conventional sintering aids and/or grain growth inhibitors, 2-50 % by volume of single crystals whiskers.

Powders according to the invention are made by thoroughly mixing ceramic powders preferably by dispersion in water or an organic solvent with suitable freezing point. The dispersion can be facilitated/improved by addition of organic additives and/or by adjustment of the pH-value when dispersing in water. If the powder shall be tool pressed, binders are added. The dry content of the dispersion shall be in the range 10-50 % by volume, preferably 25-40% by volume. The dispersion is sprayed into a vessel having a temperature well below the freezing point of the dispersing medium, preferably into a vessel containing liquid nitrogen. The frozen granules are then transferred into a freeze drier where the frozen liquid is sublimated at suitable subpressure and temperature. After freeze-drying a powder is obtained with good flow properties.

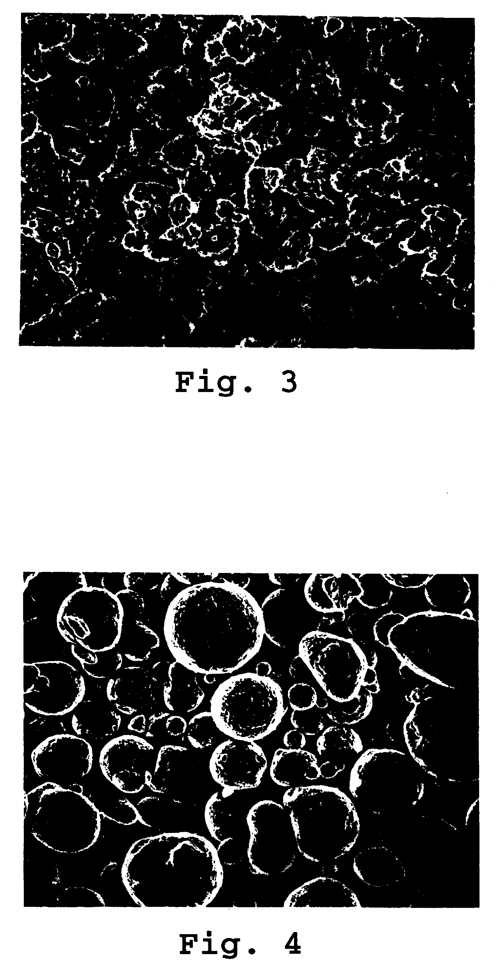

The granules of the granulated powder are spherical of essentially the same relative density as the dispersion and with a uniform distribution of whiskers. The diameter of the granules is in the range 0.01-1.0 mm, generally with a low spread in size, fig 4. Good flow properties are necessary when using uniaxial pressure sintering to get an even filling of the die to ensure even density in the sintered disc. In case of tool pressing good flow properties are necessary when manufacturing ceramic bodies of complex shape such as cutting tool inserts with complex chip breakers i.e. comprising a plurality of projections and recessed areas. In this latter case the bodies are given their final shape in the pressing operation with essentially no grinding being necessary after the sintering.

### Example 1

A ceramic slurry was manufactured in a conventional way by wet dispersion in water. The dry content was 28% by volume of ceramics with the composition 75 weight-% alumina with sintering aid and 25 weight-% SiC-whiskers. The slurry was then divided into two parts. One part was dried and granulated by conventional spray-drying technique. The other part was sprayed into a vessel containing liquid nitrogen and afterwards freeze dried at a temperature of about -20°C.

Both powders were then uniaxially pressure sintered at a pressure of 30 MPa and a temperature of 1850°C for 1 hour to round discs with the diameter 80 mm and the height 5.5 mm. From the discs square inserts with the style SNGN 120408 T02520 were manufactured.

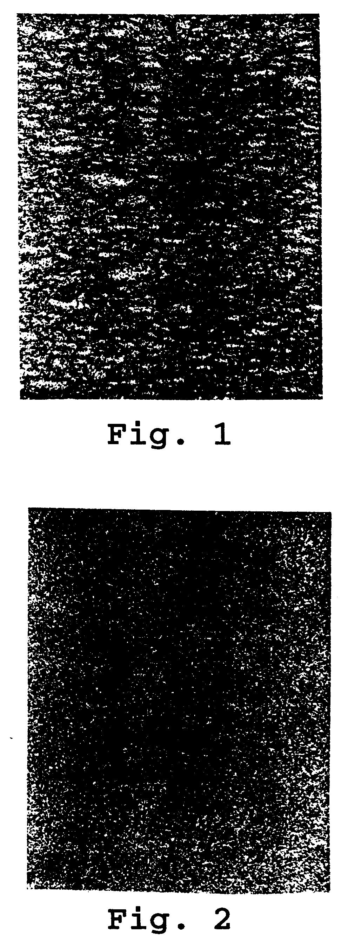

The microstructure of the inserts made from freeze granulated powder, fig. 2, shows a more homogeneous distribution of SiC-whiskers compared to the insert made from spray-dried powder, fig. 1, in which the original whisker depleted granule borders appear as a network surrounding the whisker-enriched original granule cores. The granules have been somewhat compressed in the pressing direction.

### Example 2

The inserts from example 1 were tested in a longitudinal turning operation according to the following:
Workpiece: Inconel 718Å
Cutting speed: 150 m/min
Cutting depth: 2.0 mm
Feed: 0.1 mm/rev

Result (time to notch wear >2 mm in minutes (mean of three tests))

| | |
|---|---|
| Variant A (prior art) | 4.5 |
| Variant B (according to the invention) | 6.0 |

These results indicate that the more favourable whisker distribution of variant B has resulted in a reduced notch wear.

### Example 3

A ceramic slurry was manufactured in the same way and with the same composition as in the case of example 1 with the addition of polyvinylalcohol and glycerol to the slurry. The slurry was divided into two parts. One part was dried and granulated by conventional spray-drying technique. The other part was sprayed into a vessel containing liquid nitrogen and afterwards freeze dried at a temperature of about -20°C.

Both powders were manufactured in a so called Q-cut™ geometry by tool pressing. This geometry consists of an insert and a holder. The compacted bodies were treated in a combined debinding and presintering cycle in a graphite furnace. The final temperature was 1300°C and the furnace atmosphere was hydrogen. The presintered bodies were dipped with a suction cup in a BN-slurry and then in a mullite slurry according to Swedish patent application 9004134-4. The bodies, which now were surrounded by a covering BN-layer and on top of this a covering mullite layer, were placed in a glass powder bed and after that sintered by isostatic pressing at high temperature. Before the isostatic pressing the glass was melted in order to isolate the bodies from the overpressure in the furnace. The sintering was performed at 1550°C and 160 MPa. The microstructure of the bodies made from freeze granulated powder showed an obvious more homogeneous distribution of SiC-whiskers compared to the bodies made from spray-dried powder.

### Example 4

The bodies from the preceding example were ground peripherally to a diameter of 6.35 mm and edge-treated and afterwards tested in a longitudinal turning operation according to the following:
Workpiece: Inconel 718Å
Cutting speed: 200 m/min
Cutting depth: 1 mm
Feed: 0.15 mm/rev

Result (time to notch wear >2 mm in minutes (mean of three tests))

| | |
|---|---|
| Variant A (prior art) | 5.0 |
| Variant B (according to the invention) | 7.0 |

These results indicate that the more favourable whisker distribution of variant B has resulted in a reduced notch wear.

### Example 5

A ceramic slurry was manufactured in the same way and with the same composition as in the case of example 1 with the addition of polyvinylalcohol and glycerol to the slurry. The slurry was divided into two parts. One part was dried and granulated by conventional spray-drying technique. The other part was sprayed into a vessel containing liquid nitrogen and afterwards freeze dried at a temperature of about -20°C.

Both powders were manufactured in a B-SNGN120416 geometry by tool pressing. The compacted bodies were treated in a combined debinding and presintering cycle in a graphite furnace and surrounded by a covering BN-layer and on top of this a covering mullite layer and hot isostatic pressed according to example 3. The microstructure of the bodies made from freeze granulated powder showed an obvious more homogeneous distribution of SiC-whiskers compared to the bodies made from spray-dried powder.

### Example 6

The bodies from the preceding example were ground into inserts with the style SNGN 120408 T02520 and tested in a turning operation developed to test toughness. The feed was continuously increased during the turning and the results were evaluated as feed at fracture (mean of 10 edges).

Result:

| | |
|---|---|
| Inserts A (prior art) | 0.15 mm/rev |
| Inserts B (according to the invention) | 0.20 mm/rev |

These results show a significant difference between the inserts according to the invention and the prior art inserts. This indicates that the more favourable whisker distribution of inserts B has resulted in increased toughness.

## Claims

1. Granulated ceramic powder comprising 2-50 volume-% whiskers manufactured by conventional powder metallurgical methods with the processing steps dispersion in a suitable liquid and freeze granulation, said granules having a uniform distribution of said whiskers wherein said powder comprises spherical granules the diameter of which is in the range of 0.01-1.0 mm.

## Patentansprüche

1. Granuliertes keramisches Pulver mit 2 - 50 Vol.-% Whiskern, hergestellt durch herkömmliche pulvermetallurgische Verfahren mit den Verfahrensstufen eines Dispergierens in einer geeigneten Flüssigkeit und Gefriergranulierung, wobei die Granalien eine gleichmäßige Verteilung der Whisker haben und worin das Pulver kugelige Granalien umfaßt, deren Durchmesser im Bereich von 0,1 - 1,0 mm liegt.

## Revendications

1. Poudre céramique granulée comprenant 2 à 50 % en volume de whiskers, fabriquée par des techniques classiques de la métallurgie des poudres avec les étapes opératoires de dispersion dans un liquide approprié et de granulation par congélation, lesdits granulés présentant une répartition uniforme desdits whiskers, dans laquelle ladite poudre se compose de granulés sphériques dont le diamètre se situe dans l'intervalle de 0,01 à 1,0 mm.
